# EUROPEAN PATENT SPECIFICATION

(11) **EP 2 492 108 B1**
(45) Date of publication and mention of the grant of the patent: **15.10.2014**
(21) Application number: 12156891.9
(22) Date of filing: 24.02.2012
(51) Int. Cl.: B42D 3/02, B42F 13/00

(54) **A method for making covers**
Verfahren zum Herstellen von Umschlägen
Procédé de fabrication de couvertures

(30) Priority: 28.02.2011 PL 39405711
(43) Date of publication of application: 29.08.2012
(73) Proprietor: OPUS Spolka z ograniczona odpowiedzialnoscia, 44-122 Gliwice (PL)
(72) Inventor: Macha, Aleksander, 44-100 Gliwice (PL); Nawrat, Krystian, 44-121 Gliwice (PL); Shier, Michael, Yerwood, Dorset (GB)
(74) Representative: Kuczynska, Teresa

(56) References cited:
- US-A- 5 030 027
- US-A- 5 876 143

## Description

The present application relates to a method for making covers for a set of documents, especially covers including a presentation of an illustration or other information on the covers.

Known methods for making a cover including a presentation of an illustration or other information at its top include:
- gluing a photo or image, previously applied on a medium, on the cover,
- forming transparent pockets designed for inserting photos or printed materials, and
- laminating an illustration or information medium with self-adhesive laminating film and gluing the laminated illustration or information medium on the cover.

Such covers can have a number of defects. For example, a photo or other printed information glued is typically made on a short-lived medium, which is not aesthetically pleasing at it gradually wears out during use. Exact positioning of the medium in relation to the cover during its gluing can be difficult. The use of a self-adhesive laminating film for laminating of the medium and then attaching it to the cover requires double positioning and double laminating. Additionally, intensive use of an already finished cover can lead to detachments of the corners of the attached medium.

Document US-A-5030027 discloses a:
method for making covers for a set of documents, the method comprising placing two sheets of a for lamination: first sheet of film for lamination and second transparent sheet for lamination on a rigid plane, attaching the first sheet to the rigid plane, welding the first sheet to the second sheet along an edge thereof, then inserting a medium between the first sheet and the second sheet and laminating the first sheet and the second sheet with the medium inserted therebetween.

The purpose of the present invention is to provide an easy method for making durable and impressive covers, which can include illustrations and/or other information at their tops.

A method for making covers for a set of documents according to the invention is defined by claim 1.

The first sheet is preferably welded to the second sheet along a shorter edge thereof or a longer edge thereof.

The first sheet may also be welded to the second sheet along two edges.

The first and second sheets may be for thermal lamination or for cold lamination.

Preferably, the medium includes an illustration or other information.

Preferably, the first and second sheets each include a self-adhesive surface, and the self-adhesive surfaces of the first and second sheets are attached to the medium.

The method according to the present disclosure is described more closely in an example of embodiment using drawings, in which:

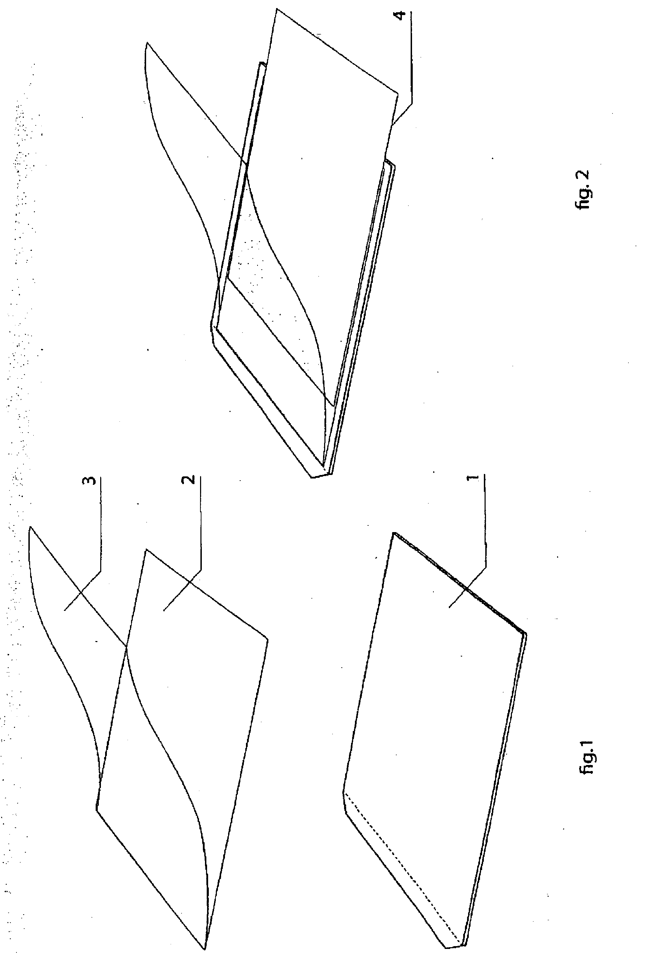

Figure 1 shows an example method that employs consecutive stages during making of a cover, and
Figure 2 shows a stage of inserting a medium in between two sheets of film prior to laminating them together.

According to the method of the present disclosure, two sheets: first sheet 2 and second sheet 3 of a transparent film for thermal lamination are placed on a rigid plane 1. The rigidity of the rigid plane 1 is preferably greater than the rigidity of the sheets 2 and 3 of the transparent film. The first sheet 2 is attached to the rigid plane 1 and the first sheet 2 is welded to the second sheet 3 along a shorter edge. An illustration or other information on a medium 4 (e.g., paper) is inserted between the partially open sheets 2 and 3 and the whole unit is subjected to laminating. A ready, aesthetically pleasing, and durable cover is obtained that can be used for binding documents using thermal gluers, binders, or by crimping ridges in a metal or plastic rail. The illustration or other information may be made on a short-lived medium.

In a variant of the method according to the present disclosure, the sheets of transparent film 2 and 3 are placed on the rigid plane 1 in a specially formed small cavity having a size of the medium 4. The cavity facilitates positioning of the medium 4 and provides a smooth surface after lamination. The sheets of transparent film 2 and 3 can be thermally welded together along two edges, for example, the shorter edge and the longer edge, which facilitates positioning of the medium 4.

In a preferred example of embodiment of the invention, the rigid plane may be formed of a rigid cardboard covered with aesthetically pleasing material and may have thickness of about 2 mm. Both sheets of transparent film may be made of highly transparent polyester film covered on one side with hot-melt adhesive. The opening temperature of the adhesive, i.e. temperature at which the adhesive changes its state from dry to liquid and starts to present adhesive properties is about 80 degrees Celsius. Thickness of the films is 60 - 100 micrometers. The medium may be made of paper or film capable of being printed on its surface by any printing method. Its properties should correspond to the applied printing method.

## Claims

1. A method for making covers for a set of documents, the method comprising placing two sheets of a transparent film for lamination: first sheet (2) for lamination and second sheet (3) for lamination on a rigid plane (1), the rigid plane (1) including a cavity and the first sheet (2) and second sheet (3) are placed in the cavity, attaching the first sheet (2) to the rigid plane (1), welding the first sheet (2) to the second sheet (3) along an edge thereof, then inserting a medium (4) between the first sheet (2) and the second sheet (3) and laminating the first sheet (2) and the second sheet (3) with the medium (4) inserted therebetween.

2. The method according to claim 1, wherein the first sheet (2) is welded to the second sheet (3)along a shorter edge thereof.

3. The method according to claim 1, wherein the first sheet (2) is welded to the second sheet(3) along a longer edge thereof.

4. The method according to claim 1, wherein the first sheet (2) is attached to the rigid plane (1), and the first sheet (2) is welded to the second sheet (3) along two edges.

5. The method according to claim 1, wherein the rigid plane (1) includes a cavity having dimensions of the medium (4).

6. The method according to claim 1, wherein the first and second sheets (2), (3) for lamination are for thermal lamination.

7. The method according to claim 1, wherein the first and second sheets (2), (3) for lamination are for cold lamination.

8. The method according to claim 1, wherein the medium (4) includes an illustration or other information.

9. The method according to claim 1, wherein the first and second sheets (2), (3) each include a self-adhesive surface, and the self-adhesive surfaces of the first and second sheets (2), (3) are attached to the medium (4).

## Patentansprüche

1. Verfahren zum Herstellen von Umschlägen für Dokumentensammlung, bei welchem zwei Bögen einer transparenten Laminierfolie, und zwar der erste Bogen (2) zum Laminieren und der zweite Bogen (3) zum Laminieren, auf einer steifen Ebene (1) aufgebracht werden, wobei die steife Ebene (1) eine Vertiefung aufweist und der erste Bogen (2) und der zweite Bogen (3) in diese Vertiefung eingebracht werden, der erste Bogen (2) an der steifen Ebene (1) befestigt wird und dieser erste Bogen (2) und der zweite Bogen (3) miteinander entlang einem Rand verschweisst werden, wonach zwischen dem ersten Bogen (2) und dem zweiten Bogen (3) ein Träger (4) eingeschoben wird, und anschliessend der erste Bogen (2) und der zweite Bogen (3) sowie der dazwischen angeordnete Träger (4) miteinander laminiert werden.

2. Verfahren nach Anspruch 1, **dadurch gekennzeichnet, dass** der erste Bogen (2) und der zweite Bogen (3) miteinander entlang dem kürzeren Rand verschweisst werden.

3. Verfahren nach Anspruch 1, **dadurch gekennzeichnet, dass** der erste Bogen (2) und der zweite Bogen (3) miteinander entlang dem längeren Rand verschweisst werden.

4. Verfahren nach Anspruch 1, **dadurch gekennzeichnet, dass** der erste Bogen (2) an der steifen Ebene (1) befestigt wird und der erste Bogen (2) und der zweite Bogen (3) miteinander entlang den zwei Rändern verschweisst werden.

5. Verfahren nach Anspruch 1, **dadurch gekennzeichnet, dass** die steife Ebene (1) eine Vertiefung mit den Abmessungen des Trägers (4) aufweist.

6. Verfahren nach Anspruch 1, **dadurch gekennzeichnet, dass** der erste und der zweite Bogen (2), (3) zum Laminieren die Bögen zum Heisslaminieren sind.

7. Verfahren nach Anspruch 1, **dadurch gekennzeichnet, dass** der erste und der zweite Bogen (2), (3) zum Laminieren die Bögen zum Kaltlaminieren sind.

8. Verfahren nach Anspruch 1, **dadurch gekennzeichnet, dass** der Träger (4) eine Darstellung oder andere Informationen umfasst.

9. Verfahren nach Anspruch 1, **dadurch gekennzeichnet, dass** der erste und der zweite Bogen (2), (3) jeweils selbstklebende Oberflächen aufweisen und diese selbstklebenden Oberflächen des ersten und des zweiten Bogens (2), (3) am Träger (4) angeklebt werden.

## Revendications

1. Procédé de fabrication de couvertures d'une série de documents, lequel procédé comprend la mise de deux feuilles de film transparent de laminage: d'une première feuille (2) de laminage et d'une deuxième feuille (3) de laminage sur un plan rigide (1), le plan rigide (1) comprenant une cavité et la première feuille (2) et la deuxième feuille (3) étant placées dans cette cavité, la première feuille (2) est fixée au plan rigide (1) et cette première feuille (2) est soudée avec la deuxième feuille (3) le long d'un bord, et un support (4) est inséré entre la première feuille (2) et la deuxième feuille (3), et ensuite la première feuille (2) et la deuxième feuille (3) étant laminées et le support (4) étant placé entre elles.

2. Procédé selon la revendication 1, **caractérisé en ce que** la première feuille (2) est soudée à la deuxième feuille (3) le long d'un bord plus court.

3. Procédé selon la revendication 1, **caractérisé en ce que** la première feuille (2) est soudée à la deuxième feuille (3) le long d'un bord plus long.

4. Procédé selon la revendication 1, **caractérisé en ce que** la première feuille (2) est fixée au plan rigide (1), et la première feuille (2) est soudée à la deuxième feuille (3) le long des deux bords.

5. Procédé selon la revendication 1, **caractérisé en ce que** le plan rigide (1) est muni d'une cavité correspondant aux dimensions du support (4).

6. Procédé selon la revendication 1, **caractérisé en ce que** la première et la deuxième feuille (2), (3) de laminage sont des feuilles de laminage à chaud.

7. Procédé selon la revendication 1, **caractérisé en ce que** la première et la deuxième feuille (2), (3) de laminage sont des feuilles de laminage à froid.

8. Procédé selon la revendication 1, **caractérisé en ce que** le support (4) porte une illustration ou une autre information.

9. Procédé selon la revendication 1, **caractérisé en ce que** la première et la deuxième feuille (2), (3) ont, chacune, des surface autocollantes et que ces surfaces autocollantes de la première et de la deuxième feuille (2), (3) sont collées au support (4).
